# EUROPÄISCHE PATENTSCHRIFT

(11) **EP 3 670 747 B1**
(45) Veröffentlichungstag und Bekanntmachung des Hinweises auf die Patenterteilung: **06.12.2023**
(21) Anmeldenummer: 19204232.3
(22) Anmeldetag: 21.10.2019
(51) Int. Cl.: E01C 23/088

(54) **SELBSTFAHRENDE BAUMASCHINE UND VERFAHREN ZUM BEARBEITEN EINES BODENBELAGS**
SELF-PROPELLED CONSTRUCTION MACHINE AND METHOD FOR PROCESSING A FLOOR LINING
ENGIN DE CONSTRUCTION AUTONOME ET PROCÉDÉ D'USINAGE D'UN REVÊTEMENT DE SOL

(30) Priorität: 21.12.2018 DE 102018222875
(43) Veröffentlichungstag der Anmeldung: 24.06.2020
(73) Patentinhaber: Wirtgen GmbH, 53578 Windhagen (DE)
(72) Erfinder: Berning, Christian, 53909 Zülpich (DE); Held, Hanjo, 53578 Windhagen (DE); Müller, René, 53560 Vettelschoss (DE)
(74) Vertreter: dompatent von Kreisler Selting Werner - Partnerschaft von Patent- und Rechtsanwälten mbB

(56) Entgegenhaltungen:
- EP-A1- 0 547 378
- EP-A1- 2 716 816
- EP-A1- 2 722 441
- DE-A1-102006 020 293
- DE-A1-102012 100 934

## Beschreibung

Die Erfindung betrifft eine selbstfahrende Baumaschine nach Anspruch 1, sowie ein Verfahren zum Bearbeiten eines Bodenbelags nach Anspruch 12.

Es sind Baumaschinen, insbesondere Straßenfräsmaschinen oder Surface-Miner zum Bearbeiten eines Bodenbelags bekannt, die eine Fräswalze aufweisen, die in einem Maschinenrahmen gelagert ist, wobei die Fräswalze eine erste und eine zweite Stirnseite aufweist. Beim Fräsen des Bodenbelags mit der Fräswalze entsteht eine Frässpur. Diese Baumaschinen weist meistens zumindest eine erste Messeinrichtung auf, die neben der ersten Stirnseite der Fräswalze angeordnet ist und den Abstand des Maschinenrahmens neben der ersten Stirnseite der Fräswalze relativ zum Bodenbelag misst und zumindest eine zweite Messeinrichtung aufweist, die neben der zweiten Stirnseite der Fräswalze angeordnet ist und den Abstand des Maschinenrahmens neben der zweiten Stirnseite der Fräswalze relativ zum Bodenbelag misst. Ferner ist meistens eine Steuereinrichtung zum Steuern der Frästiefe vorgesehen, wobei in einem ersten Fräsbetrieb die Steuereinrichtung die Frästiefe mit Hilfe von Messungen der ersten und der zweiten Messeinrichtung ermittelt.

DE 10 2012 100 934 A1 offenbart einer Straßenfräsmaschinensteuerung für eine Straßenfräsmaschine der Art, die eine Fahrbahnbelagoberfläche abfräst, über welche die Straßenfräsmaschine sich bewegt, wobei mehrere Sensoren vorgesehen sind.

Die EP 2 722 441 A1 beschreibt eine selbstfahrende Baumaschine, insbesondere Straßenfräse, die über einen Maschinenrahmen und ein Fahrwerk verfügt, das mindestens ein lenkbares vorderes Laufwerk, mindestens ein in Arbeitsrichtung linkes, hinteres Laufwerk und mindestens ein in Arbeitsrichtung rechtes, hinteres Laufwerk aufweist, wobei eine Steuereinheit zum Ansteuern einer Einrichtung zum Anheben oder Absenken der Laufwerke für die Höhenverstellung der Laufwerke vorgesehen ist,

Bei bekannten Baumaschinen besteht häufig das Problem, dass die Messung der Frästiefe in nicht allen Betriebssituationen ausreichend genau ist.

Die Aufgabe der vorliegenden Erfindung ist es daher, die Zuverlässigkeit der Frästiefenmessung zu verbessern.

Zur Lösung dieser Aufgabe dienen die Merkmale der Ansprüche 1 und 12.

Die Erfindung sieht in vorteilhafter Weise vor, dass die Steuereinrichtung (40) derart ausgebildet ist, dass mittels der Steuereinrichtung ein zweiter Fräsbetrieb detektierbar ist, bei dem die Fräswalze an einer noch nicht gefrästen Frässpur angesetzt wird, die neben einer bereits gefrästen Frässpur angeordnet ist, wobei die Steuereinrichtung derart ausgebildet ist, dass sobald der zweite Fräsbetrieb detektiert wird, die Steuereinrichtung (40) zum Ermitteln der Frästiefe anstelle der ersten und/oder der zweiten Messeinrichtung Messungen zumindest einer dritten Messeinrichtung verwendet wobei die Steuereinrichtung (40) ausgebildet ist zum Überprüfen, ob die Baumaschine (1) nach dem zweiten Fräsbetrieb erneut in dem ersten Fräsbetrieb fräst, und dass die Steuereinrichtung (40) derart ausgebildet ist, dass sobald das erneute Fräsen im ersten Fräsbetrieb festgestellt wird, die Frästiefe erneut mit Hilfe von Messungen der ersten und der zweiten Messeinrichtung (30, 32) ermittelt, wobei die Steuereinrichtung (40) ausgebildet ist, zum Feststellen des erneuten Fräsens im ersten Fräsbetrieb die Zeit und/oder die von der Baumaschine (1) zurückgelegte Wegstrecke zu überprüfen und mit einer vorgegebenen Zeit und/oder Wegstrecke zu vergleichen.

Die vorgegebene Wegstrecke kann beispielsweise 1,5 m betragen.

Die vorliegende Erfindung hat den Vorteil, dass insbesondere bei einem zweiten Fräsbetrieb, bei dem die Fräswalze an einer noch nicht gefrästen Frässpur angesetzt wird, die neben einer bereits gefrästen Frässpur angeordnet ist, die Frästiefe genauer ermittelt werden kann. Das liegt daran, dass häufig als erste und zweite Messeinrichtung Messeinrichtungen verwendet werden, von denen eine Messeinrichtung bei diesem Fräsbetrieb sowohl über der nicht gefrästen Frässpur als auch über der bereits gefrästen Frässpur angeordnet ist. Die Frästiefe kann somit mit einer dieser Messeinrichtungen nicht mit ausreichender Genauigkeit ermittelt werden. In diesem Fall kann die Frästiefenmessung dadurch verbessert werden, dass diese erste oder zweite Messeinrichtung, die die Frästiefe nicht korrekt ermitteln kann, nicht verwendet wird, sondern eine dritte Messeinrichtung.

Die erste oder zweite Messeinrichtung können beispielsweise an einem Balken angeordnet sein, der neben der Fräswalze auf der Erde aufliegt und den Abstand des Maschinenrahmens zum Bodenbelag misst. Alternativ können auch mehrere in Fahrtrichtung hintereinander angeordnete Abstandssensoren auf jeder Seite der Baumaschine vorgesehen sein, wobei dies beispielsweise in der EP 0 547 378 A1 beschrieben wird.

Die Erfindung umfasst auch den Fall, dass die noch nicht gefräste Frässpur, an der die Fräswalze angesetzt wird, die neben einer bereits gefrästen Frässpur angeordnet ist, in einem vorherigen Arbeitsgang bereits gefräst worden sein kann. Der Bodenbelag kann in mehreren Arbeitsgängen abgefräst werden. Bei einem Abfräsen des Bodenbelags in zwei Arbeitsgängen wird zunächst in einem ersten Arbeitsgang eine erste Bodenbelagsschicht beispielsweise in mehreren Frässpuren abgefräst. Danach wird in einem zweiten Arbeitsgang eine weitere Bodenbelagsschicht, die unterhalb der ersten Bodenbelagsschicht angeordnet ist, ebenfalls in mehreren Frässpuren abgefräst.

Es kann auch auf der ersten Stirnseite der Fräswalze ein erstes Seitenschild als erster Kantenschutz und auf der zweiten Stirnseite der Fräswalze ein zweites Seitenschild als zweiter Kantenschutz angeordnet sein, wobei das erste und das zweite Seitenschild jeweils relativ zum Maschinenrahmen höhenverstellbar sind und jeweils auf dem Bodenbelag neben der Fräswalze aufliegen. Die zumindest eine erste Messeinrichtung kann an dem ersten Seitenschild und die zumindest eine zweite Messeinrichtung kann an dem zweiten Seitenschild angeordnet sein, die jeweils die Höhenverstellung des ersten und zweiten Seitenschildes relativ zum Maschinenrahmen messen und damit den Abstand des Maschinenrahmens relativ zum Bodenbelag messen. Das erste Seitenschild kann auch Teil der ersten Messeinrichtung sein und das zweite Seitenschild kann auch Teil der zweiten Messeinrichtung sein. Die erste und zweite Messeinrichtung können jeweils zumindest einen Sensor aufweisen. Der zumindest eine Sensor kann ein Sensor sein, der die Verstellung des Seitenschildes relativ zu dem Maschinenrahmen detektiert. Der zumindest eine Sensor kann beispielsweise ein Seilzugsensor sein, alternativ kann die Verstellung des Seitenschildes gegenüber dem Maschinenrahmen jedoch auch von anderen taktilen oder berührungslosen Sensoren (z. B. Ultraschallsensor) erfasst werden. In diesen Fällen wäre das Seitenschild jeweils Teil der Messeinrichtung.

Als weitere Alternative kann ein an dem Maschinenrahmen angeordneter Sensor auch direkt den Abstand zum Bodenbelag messen. In diesem Fall würde das jeweilige Seitenschild dann nicht Teil der Messeinrichtung sein.

Die Steuereinrichtung kann zum Detektieren des zweiten Fräsbetriebs, bei dem die Fräswalze an einer noch nicht gefrästen Frässpur angesetzt wird, die neben einer bereits gefrästen Frässpur angeordnet ist, die gemessenen und/oder die vorgegebenen Werte der ersten und/oder der zweiten Messeinrichtung auswerten. Die gemessenen und/oder die vorgegebenen Werte der ersten und/oder der zweiten Messeinrichtung können beispielsweise mit gespeicherten Referenzwerten verglichen werden. Die gemessenen Werte können auch als Istwerte bezeichnet werden und die vorgegebenen Werte können auch als Sollwerte bezeichnet werden.

Die Steuereinrichtung kann zum Detektieren des zweiten Fräsbetriebs bei dem die Fräswalze an einer noch nicht gefrästen Frässpur angesetzt wird, die neben einer bereits gefrästen Frässpur angeordnet ist, die Differenz zwischen den vorgegebenen und den gemessenen Werten der ersten und/oder zweiten Messeinrichtung bilden und mit einem vorgegebenen Referenzwert vergleichen.

Der Referenzwert kann durch vorherige Versuche ermittelt werden.

Üblicherweise ist der zu fräsende Bodenbelag, beispielsweise eine Straße, breiter als die Fräswalzenbreite und somit die Arbeitsbreite der Straßenfräse. Daher müssen zum vollständigen Abfräsen der Oberfläche mehrere Frässpuren nebeneinander gefräst werden. Erfolgt die Regelung der Frästiefe über die oben beschriebenen Messeinrichtungen, so befindet sich, wenn die zweite Spur neben einer bereits gefrästen Spur gefräst wird, eine der Messeinrichtungen auf bereits gefrästem Bodenbelag, während sich die zweite Messeinrichtung auf dem ungefrästen Bodenbelag befindet. Um das gewünschte Fräsergebnis zu erreichen wird also auf der Seite, die sich auf gefrästem Bodenbelag befindet eine Frästiefe von Null, auf der anderen Seite eine Frästiefe entsprechend dem Sollwert also der Soll-Frästiefe vorgegeben.

Liegt eine Messeinrichtung auf einer bereits gefrästen Frässpur auf, so misst diese Messeinrichtung eine Frästiefe von nahezu oder gleich Null. Liegt die Messeinrichtung auf dem nicht gefrästen Bodenbelag auf, so würde diese Messeinrichtung den Sollwert oder nahezu den Sollwert messen. Insbesondere beim Ansetzen, d.h.am Beginn der zweiten Frässpur, kann der Fall eintreten, dass die Messeinrichtung auf derjenigen Seite welche im weiteren Fräsprozess die bereits gefräste Oberfläche abtastet, sowohl über dem gefrästen Bodenbelag als auch über dem nicht gefrästen Bodenbelag angeordnet ist, und daher weder richtig den Abstand zu dem gefrästen Bodenbelag noch richtig den Abstand zu dem ungefrästen Bodenbelag bestimmen kann. Der gemessene Wert liegt dann zwischen Null und dem Sollwert. Nahezu Null bedeutet, dass der Wert in der Nähe von Null ist, vorzugsweise maximal +/- 1,5 cm von Null abweicht. Ein gemessener Wert der nahezu den Sollwert betragen soll, weicht vorzugweise maximal +/- 1,5 cm von dem Sollwert ab.

Die Steuereinrichtung kann zum Detektieren des zweiten Fräsbetriebs, bei dem die Fräswalze an einer noch nicht gefrästen Frässpur angesetzt wird, die neben einer bereits gefrästen Frässpur angeordnet ist, überprüfen,
- ob der vorgegebene Wert für die Frästiefe, d.h. der Sollwert, für die erste Messeinrichtung nahezu oder gleich Null beträgt und der gemessene Wert für die Frästiefe, d.h. der Istwert, der zweiten Messeinrichtung gleich oder nahezu den Sollwert beträgt oder ob
- ob der vorgegebene Wert für die Frästiefe, d.h. der Sollwert, für die zweite Messeinrichtung nahezu oder gleich Null beträgt und der gemessene Wert für die Frästiefe, d.h. der Istwert, der ersten Messeinrichtung gleich oder nahezu den Sollwertbeträgt.

Es kann auch alternativ oder zusätzlich überprüft werden, ob die erste oder zweite Messeinrichtung, bei der der vorgegebene Wert für die Frästiefe, d.h. der Sollwert nahezu oder gleich Null beträgt einen gemessen Wert für die Frästiefe, d.h. einen Istwert, zwischen Null und dem Sollwert der anderen der ersten oder zweiten Messeinrichtung aufweist, wobei der Wert vorzugweise größer als 1,5 cm ist. Es dabei klar, dass bei einer größeren Frästiefe die Fräswalze weiter abgesenkt wird. Ein größerer Wert für die Frästiefe bedeutet somit ein tieferer Schnitt.

Die erste Messeinrichtung kann zumindest zwei Sensoren und die zweite Messeinrichtung kann ebenfalls zumindest zwei Sensoren aufweisen, die jeweils in Fahrtrichtung hintereinander angeordnet sind, wobei die Steuereinrichtung zum Detektieren des zweiten Fräsbetriebs die gemessenen und/oder die vorgegebenen Werte der zumindest zwei Sensoren der ersten und/oder die gemessenen und/oder die vorgegebenen Werte der zumindest zwei Sensoren der zweiten Messeinrichtung auswerten kann.

Es kann die Differenz der Werte der jeweiligen zwei Sensoren gebildet werden und mit einem Referenzwert verglichen werden. Auf diese Weise kann der zweite Fräsbetrieb detektiert werden.

Die jeweiligen Sensoren können den Abstand des Maschinenrahmens relativ zum Bodenbelag messen. Das erste Seitenschild kann auch Teil der ersten Messeinrichtung sein und das zweite Seitenschild kann auch Teil der zweiten Messeinrichtung sein. Die zumindest zwei Sensoren pro Messeinrichtung können Sensoren sein, die die Verstellung des Seitenschildes relativ zu dem Maschinenrahmen detektieren. Die zumindest zwei Sensoren pro Messeinrichtung können beispielsweise Seilzugsensoren sein. Alternativ kann die Verstellung des Seitenschildes gegenüber dem Maschinenrahmen jedoch auch von anderen taktilen oder berührungslosen Sensoren (z. B. Ultraschallsensor) erfasst werden. In diesen Fällen wäre das Seitenschild jeweils Teil der Messeinrichtung.

Als weitere Alternative können die zumindest zwei Sensoren pro Messeinrichtung auch an dem Maschinenrahmen angeordnete Sensoren sein, die direkt den Abstand zum Bodenbelag messen. In diesem Fall ist das jeweilige Seitenschild dann nicht Teil der Messeinrichtung.

Die Steuereinrichtung kann anhand von GPS-Daten überprüfen, ob der zweite Fräsbetrieb vorliegt, wobei die Steuereinrichtung zumindest die aktuellen GPS-Daten der Baumaschine mit gespeicherten GPS-Daten bereits gefräster Frässpuren vergleichen kann.

Ein Profildetektionssensor kann an dem Maschinenrahmen angeordnet sein, der das Profil der Bodenoberfläche in Fahrtrichtung vor der Fräswalze detektiert, wobei die Steuereinrichtung mit Hilfe des Profildetektionssensors feststellen kann, ob der zweite Fräsbetrieb vorliegt.

Alternativ oder zusätzlich kann beim Ansetzen in der ersten Spur auch eine Markierung angebracht werden. Diese Markierung (z. B. ein RFID-Chip) kann dann beim Ansetzen in der zweiten Spur zum Detektieren des zweiten Fräsbetriebs verwendet werden.

Die zumindest eine dritte Messeinrichtung kann die Querneigung des Maschinenrahmens messen. Erfindungsgemäß erfolgt die Regelung der Frästiefe im zweiten Fräsbetrieb somit einerseits durch eine der ersten und zweiten Messeinrichtungen und andererseits durch die dritte Messeinrichtung, wobei die Frästiefe an der einen Stirnseite der Fräswalze mithilfe der ersten oder zweiten Messeinrichtung geregelt wird und die Regelung der Frästiefe auf der anderen Seite durch die Überwachung der Querneigung erfolgt. Vorzugsweise wird dabei die Querneigung konstant gehalten. Die Querneigung kann hierzu absolut, d.h. bezogen auf den Erdmittelpunkt, oder bevorzugt relativ zum ungefrästen, oder gefrästen Bodenbelag gemessen werden.

Die zumindest eine dritte Messeinrichtung kann an einem Abstreifer angeordnet sein, der in Fahrtrichtung hinter der Fräswalze angeordnet ist, höhenverstellbar ist und auf der durch die Fräswalze gefrästen Bodenoberfläche aufliegt. Der Abstreifer greift somit in die von der Fräswalze erzeugte Frässpur ein und zieht den Grund der Frässpur ab, so dass sich hinter dem Abstreifer kein abgefrästes Material mehr in der Frässpur befindet.

Der Abstreifer kann auch Teil der dritten Messeinrichtung sein. Die dritte Messeinrichtung kann zumindest einen am Maschinenrahmen angeordneten Sensor aufweisen, der die Verstellung des Abstreifers relativ zu dem Maschinenrahmen detektiert.

Als weitere Alternative kann der zumindest eine Sensor auch den Abstand des Maschinenrahmens zur Bodenoberfläche selbst messen. In diesem Fall ist der Abstreifer dann nicht Teil der Messeinrichtung.

Die dritte Messeinrichtung kann zumindest zwei Sensoren aufweisen, die an dem Abstreifer angeordnet sind, die in einer orthogonal zur Fahrtrichtung verlaufenden Ebene nebeneinander angeordnet sind. Die jeweiligen Sensoren können den Abstand des Maschinenrahmens relativ zum Bodenbelag messen. Die zumindest zwei Sensor können Sensoren sein, die die Verstellung des Abstreifers relativ zu dem Maschinenrahmen detektieren. Die zumindest zwei Sensoren können beispielsweise Seilzugsensoren sein. Alternativ kann die Verstellung des Abstreifers gegenüber dem Maschinenrahmen jedoch auch von anderen taktilen oder berührungslosen Sensoren (z. B. Ultraschallsensor) erfasst werden. In diesen Fällen wäre der Abstreifer Teil der dritten Messeinrichtung.

Als weitere Alternative können die zumindest zwei Sensoren auch an dem Maschinenrahmen angeordnete Sensoren sein, die direkt den Abstand zum Bodenbelag messen. Auch diese Sensoren können in einer orthogonal zur Fahrtrichtung verlaufenden Ebene nebeneinander angeordnet sein.

Die Baumaschine kann zumindest drei Fahreinrichtungen aufweisen, die relativ zum Maschinenrahmen höhenverstellbar sein können. Zur Höhenverstellung können Hubsäulen vorgesehen sein, mit deren Hilfe der Maschinenrahmen relativ zu den Fahreinrichtungen verstellbar und damit höhenverstellbar ist. Auf diese Weise kann die an dem Maschinenrahmen gelagerte Fräswalze höhenverstellt werden. Als Messungen für die dritte Messeinrichtung können auch die Verstellungen der Hubsäulen der Fahrwerke relativ zum Bodenbelag herangezogen werden.

Sofern der zweite Fräsbetrieb detektiert worden ist, wird die Quer- und/oder Längsneigung der Baumaschine vorzugsweise konstant gehalten.

Sobald die Steuereinrichtung den zweiten Fräsbetrieb detektiert, kann die Steuereinrichtung überprüfen, ob die erste oder die zweite Messeinrichtung näher an der bereits gefrästen Frässpur angeordnet ist und dann den zweiten Fräsbetrieb zum Ermitteln der Frästiefe die Messungen der dritten Messeinrichtung und derjenigen Messeinrichtung verwendet, die weiter entfernt von der bereits gefrästen Frässpur angeordnet ist. Insbesondere kann die Steuereinrichtung diejenige der ersten und zweiten Messeinrichtungen ermitteln, für die ein Sollwert von Null oder nahezu Null eingestellt ist und dann im zweiten Fräsbetrieb die dritte Messeinrichtung und die andere der ersten und zweiten Messeinrichtungen verwenden.

Zur Überprüfung, ob die erste oder die zweite Messeinrichtung näher an der bereits gefrästen Frässpur angeordnet ist, können die vorgegebenen und gemessenen Werte der ersten und zweiten Messeinrichtung verwendet werden. Alternativ kann auch ein Profildetektionssensor vorgesehen sein, der an dem Maschinenrahmen angeordnet sein kann, der das Profil der Bodenoberfläche in Fahrtrichtung vor der Fräswalze detektiert. Als weitere Alternative können GPS-Daten herangezogen werden, wobei die Steuereinrichtung die aktuellen GPS-Daten der Baumaschine mit gespeicherten GPS-Daten bereits gefräste Frässpuren vergleichen kann. Gemäß der vorliegenden Erfindung kann ebenfalls ein Verfahren zum Bearbeiten von Bodenbelägen mit einer selbstfahrenden Baumaschine, insbesondere Straßenfräsmaschine oder Surface-Miner gemäß Anspruch 12 vorgesehen sein.

Zum Detektieren des zweiten Fräsbetriebs, bei dem die Fräswalze an einer noch nicht gefrästen Frässpur angesetzt wird, die neben einer bereits gefrästen Frässpur angeordnet ist, können die gemessenen und/oder die vorgegebenen Werte der ersten und/oder der zweiten Messeinrichtung ausgewertet werden. Die gemessenen und/oder die vorgegebenen Werte der ersten und/oder der zweiten Messeinrichtung können mit gespeicherten Referenzwerten verglichen werden

Zum Detektieren des zweiten Fräsbetriebs, bei dem die Fräswalze an einer noch nicht gefrästen Frässpur angesetzt wird, die neben einer bereits gefrästen Frässpur angeordnet ist, kann die Differenz zwischen den vorgegebenen und den gemessenen Werten der ersten und/oder zweiten Messeinrichtung gebildet werden und mit einem vorgegebenen Referenzwert verglichen werden.

Wie bereits oben beschrieben, kann der Referenzwert anhand von Versuchen ermittelt werden.

Zum Detektieren des zweiten Fräsbetriebs kann überprüft werden, ob
- der vorgegebene Wert für die Frästiefe, d.h. der Sollwert, für die erste Messeinrichtung nahezu oder gleich Null beträgt und der gemessene Wert für die Frästiefe, d.h. der Istwert, der zweiten Messeinrichtung gleich oder nahezu den Sollwertbeträgt oder ob
- der vorgegebene Wert für die Frästiefe, d.h. der Sollwert, für die zweite Messeinrichtung nahezu oder gleich Null beträgt und der gemessene Wert für die Frästiefe, d.h. der Istwert, der ersten Messeinrichtung gleich oder nahezu den Sollwert beträgt.

Es kann auch alternativ oder zusätzlich überprüft werden, ob die erste oder zweite Messeinrichtung, bei der der vorgegebene Wert für die Frästiefe, d.h. der Sollwert, nahezu oder gleich Null beträgt einen gemessen Wert für die Frästiefe, d.h. einen Istwert, zwischen Null und dem Sollwert der anderen der ersten oder zweiten Messeinrichtung aufweist, wobei der Wert vorzugweise größer als 1, 5 cm ist.

Alternativ kann auch anhand von GPS-Daten überprüft werden, ob die Baumaschine im zweiten Fräsbetrieb fräst, wobei zumindest die aktuellen GPS-Daten der Baumaschine mit gespeicherten GPS-Daten bereits gefräste Frässpuren vergleichen werden können.

Es kann auch das Profil der Bodenoberfläche in Fahrtrichtung vor der Fräswalze detektiert werden, wobei mit Hilfe des Profils der Bodenoberfläche in Fahrtrichtung vor der Fräswalze festgestellt werden kann, ob die Baumaschine im zweiten Fräsbetrieb fräst.

Im Folgenden wird unter Bezugnahme auf die Zeichnungen ein Ausführungsbeispiel der vorliegenden Erfindung näher erläutert.

Es zeigen schematisch:
- Fig. 1: eine Baumaschine gemäß der vorliegenden Erfindung,
- Fig. 2: eine rein schematische Draufsicht auf den gefrästen und den nicht gefrästen Bodenbelag, sowie auf die Fräswalze mit Seitenschildern und Abstreifer,
- Fig. 3: eine Seitenansicht auf die schematische Ausgestaltung aus Fig. 2, und
- Fig. 4: eine Rückansicht auf die schematische Ausgestaltung von Fig. 2.

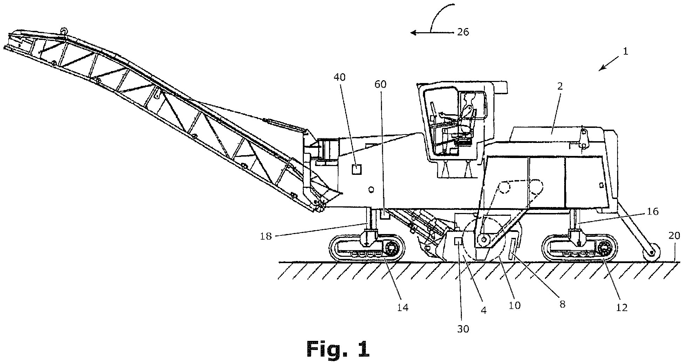

Fig. 1 zeigt eine selbstfahrende Baumaschine 1 zum Bearbeiten eines Bodenbelags 20. Die Baumaschine 1 weist einen Maschinenrahmen 2 und zumindest drei Fahreinrichtungen 12, 14 auf. Die Baumaschine kann jedoch auch, wie im dargestellten Ausführungsbeispiel dargestellt, vier Fahreinrichtungen 12, 14 aufweisen. Die Fahreinrichtungen 12, 14 können Räder oder Kettenlaufwerke sein.

Zumindest zwei Fahreinrichtungen 12, 14 können höhenverstellbar sein. Im dargestellten Ausführungsbeispiel sind alle vier Fahreinrichtungen 12, 14 höhenverstellbar. Zur Höhenverstellung sind Hubsäulen 16, 18 vorgesehen, mit deren Hilfe der Maschinenrahmen 2 relativ zu den Fahreinrichtungen 12, 14 verstellbar und damit höhenverstellbar ist. Auf diese Weise kann die an dem Maschinenrahmen 2 gelagerte Fräswalze 10 höhenverstellt werden.

Ferner weist die Baumaschine 1 eine Steuereinrichtung 40 auf, die im Folgenden genauer beschrieben wird.

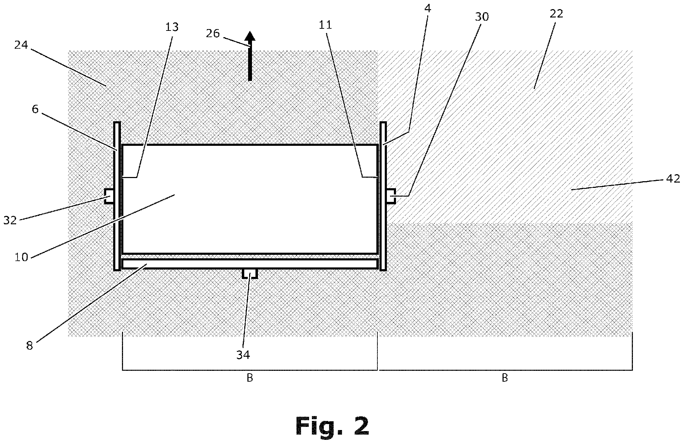

Fig. 2 zeigt eine Draufsicht auf einen Bodenbelag 20 sowie auf eine schematisch dargestellte Fräswalze 10 mit Seitenschildern 4, 6 und Abstreifer 8. Der Bodenbelag 20 ist sowohl der bereits gefrästen Bodenbelag 22 als auch der noch ungefräste Bodenbelag 24 sein. Die Fräswalze 10 ist, wie bereits bezüglich Fig. 1 beschrieben, in dem Maschinenrahmen 2 gelagert. Beim Fräsen des Bodenbelags 20 mit der Fräswalze 10 entsteht eine Frässpur 42. Dies kann Fig. 2 entnommen werden. Die Frässpur 42 weist eine Breite B auf, die der Breite B der Fräswalze 10 entspricht. Die Frässpur 42 ist die Spur, die durch das Fräsen mit der Fräswalze entsteht.

Die Fräswalze 10 weist eine erste Stirnseite 11 und eine zweite Stirnseite 13 auf.

Es ist zumindest eine erste Messeinrichtung 30 vorgesehen, die neben der ersten Stirnseite 11 der Fräswalze 10 angeordnet ist und den Abstand des Maschinenrahmens 2 neben der ersten Stirnseite 11 der Fräswalze 10 relativ zum Bodenbelag 20 misst, wobei der Bodenbelag 20 der bereits gefräste Bodenbelag 22 oder der noch nicht gefräste Bodenbelag 24 sein kann.

Es ist ferner zumindest eine zweite Messeinrichtung 32 vorgesehen, die neben der zweiten Stirnseite 13 der Fräswalze 10 angeordnet ist und den Abstand des Maschinenrahmens 2 neben der zweiten Stirnseite 13 der Fräswalze relativ zum Bodenbelag 20 misst, wobei der Bodenbelag 20 der bereits gefräste Bodenbelag 22 oder der noch nicht gefräste Bodenbelag 24 sein kann.

Die dargestellten Messeinrichtungen 30, 32 messen die Höhenverstellung der Seitenschilder 4, 6 relativ zum Maschinenrahmen 2. Die Seitenschilder 4,6 liegen vorzugsweise auf dem Bodenbelag 20 auf. Dadurch, dass die Fräswalze 10 im Maschinenrahmen 2 gelagert ist, kann die Verstellung der Seitenschilder 4, 6 relativ zum Maschinenrahmen 2 dafür herangezogen werden, den Abstand zwischen Maschinenrahmen 2 und Bodenbelag 20 zu bestimmen. Die Messeinrichtungen 30, 32 können an den Seitenschildern 4, 6 angebrachte Sensoren sein. Es können beispielsweise Seilzugsensoren am jeweiligen Seitenschild 4,6 angebracht sein, die die Verstellung des jeweiligen Seitenschilds 4, 6 messen. Alternativ können auch andere Sensoren vorgesehen sein, der die Verstellung des jeweiligen Seitenschilds 4, 6 messen.

Im vorliegenden Fall sind die Seitenschilder 4, 6 vorzugsweise Teil der ersten oder zweiten Messeinrichtung 30, 32. Die ersten und/oder zweite Messeinrichtung können auch nicht an den Seitenschildern 4,6 angeordnet sein. Es kann beispielsweise auch jegliche andere Tasteinrichtung als erste und/oder zweite Messeinrichtung verwendet werden. So kann beispielsweise auch jeweils ein Balken neben der jeweiligen Stirnseite 11, 13 der Fräswalze 10 angeordnet sein, mit dessen Hilfe der Abstand vom Maschinenrahmen 2 zum Bodenbelag 20 messbar ist. Die Baumaschine weist eine Längsrichtung auf, die in Fahrtrichtung verläuft, und eine Querrichtung, in orthogonal zu dieser verläuft. Der Begriff neben der jeweiligen Stirnseite bedeutet gemäß der vorliegenden Erfindung in Querrichtung neben einer Ebene die durch die jeweilige Stirnseite verläuft, wobei die Messeinrichtung auch zumindest teilweise zwar in Querrichtung neben der Stirnseite angeordnet sein kann, allerdings auch in Längsrichtung vor oder hinter der Fräswalze angeordnet sein kann.

Die oben beschriebene Steuereinrichtung 40 ist zum Steuern der Frästiefe vorgesehen, wobei in einem ersten Fräsbetrieb die Steuereinrichtung 40 die Frästiefe mit Hilfe von Messungen der ersten und der zweiten Messeinrichtung 30, 32 ermittelt.

In Fig. 2 wird die Fräswalze in einer noch nicht gefrästen Frässpur angesetzt, die neben einer bereits gefrästen Frässpur 42 angeordnet ist.

Mittels der Steuereinrichtung 40 kann ein zweiter Fräsbetrieb detektierbar sein, bei dem die Fräswalze 10 an einer noch nicht gefrästen Frässpur angesetzt wird, die neben einer bereits gefrästen Frässpur 42 angeordnet ist, wobei die Steuereinrichtung 40, sobald der zweite Fräsbetrieb detektiert wird, zum Ermitteln der Frästiefe anstelle der ersten und/oder der zweiten Messeinrichtung 30, 32 Messungen zumindest einer dritten Messeinrichtung 34 verwendet.

In dem dargestellten Ausführungsbeispiel weist die Fräswalze 10 an der ersten Stirnseite 11 ein als Kantenschutz ausgebildetes Seitenschild 4 auf. Ferner weist die Fräswalze 10 an der zweiten Stirnseite 13 ein ebenfalls als Kantenschutz ausgebildetes Seitenschild 6 auf. In Fahrtrichtung 26 hinter der Fräswalze 10 ist ein Abstreifer 8 angeordnet, der auf dem mit der Fräswalze 10 gefrästen Bodenbelag aufliegt. In Figur 2 liegt der Abstreifer 8 auf dem noch nicht gefrästen Bodenbelag 24 auf, da die Fräswalze den Bodenbelag 20 noch nicht gefräst hat und die Fräswalze an einer neuen Frässpur angesetzt wird.

Die erste Messeinrichtung 30 ist an dem Seitenschild 4 angeordnet. Die zweite Messeinrichtung 32 ist an dem zweiten Seitenschild 6 angeordnet. Die dritte Messeinrichtung 34 ist an dem Abstreifer 8 angeordnet.

Wie in Fig. 2 dargestellt, ist das Seitenschild 4 teilweise über dem ungefrästen Bodenbelag 24 und teilweise über dem gefrästen Bodenbelag 22 angeordnet.

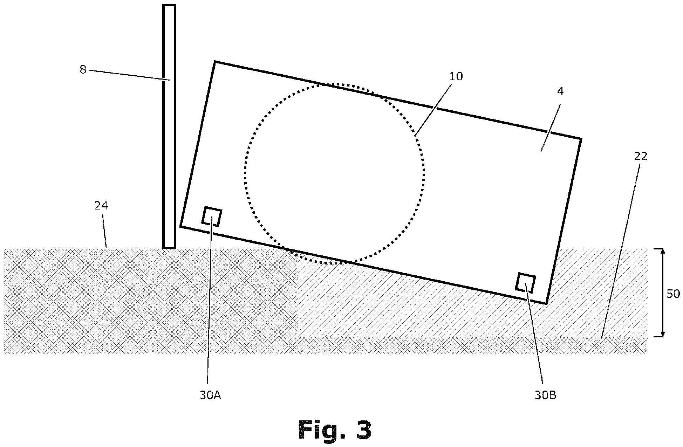

In Fig. 3 ist die Seitenansicht des Seitenschilds 4 schematisch dargestellt. Die Fräswalze 10 ist gestrichelt dargestellt. Das Seitenschild 4 ist dadurch, dass es teilweise über dem gefrästen Bodenbelag 22 und teilweise über dem ungefrästen Bodenbelag 24 angeordnet ist, schräg gestellt. Da die Messeinrichtung 30 an dem Kantenschutz angeordnet ist und dieser schräg gestellt ist, kann die Messeinrichtung weder richtig den Abstand des Maschinenrahmens 2 zu dem gefrästen Bodenbelag 22 noch zu dem ungefrästen Bodenbelag 24 messen. Auch wenn die Messeinrichtung an einem anderen Element neben der Stirnseite der Fräswalze 10 angeordnet ist liegt das gleiche Problem vor.

Die Steuereinrichtung 40 detektiert diesen zweiten Fräsbetrieb und zieht anstelle der ersten Messeinrichtung 30 die Messeinrichtung 34 heran.

Auf diese Weise kann die Frästiefe wesentlich genauer bestimmt werden. Die Frästiefe ist im Übrigen mit dem Bezugszeichen 50 angegeben.

Zum Detektieren des zweiten Fräsbetriebs kann die Steuereinrichtung 40 die gemessenen und/oder die vorgegebenen Werte der ersten und/oder zweiten Messeinrichtung auswerten. Die gemessenen und/oder vorgegebenen Werte können mit Referenzwerten verglichen werden. Es kann insbesondere die Differenz zwischen den vorgegebenen und gemessenen Werten der jeweiligen Messeinrichtung 30, 32 gebildet werden und mit vorgegebenen Referenzwerten verglichen werden. Die vorgegebenen Referenzwerte können zuvor anhand von Versuchsbeispielen ermittelt werden und gespeichert werden.

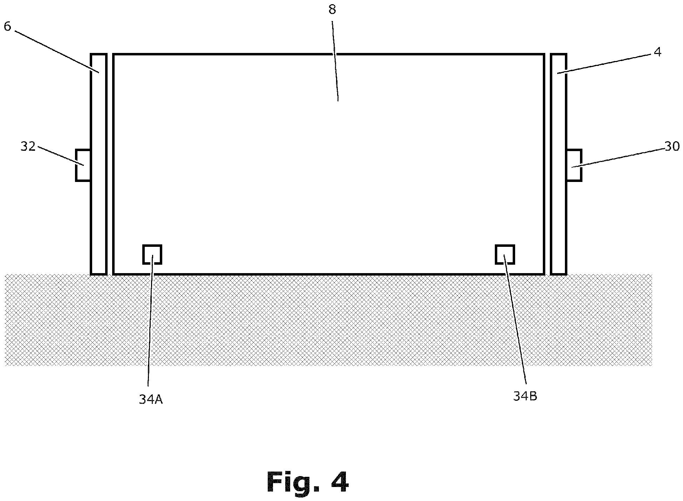

Zum Detektieren des zweiten Fräsbetriebs kann beispielsweise zunächst festgestellt werden, auf welcher Seite die bereits gefräste Frässpur 42 angeordnet ist. Dies kann durch die Überprüfung der vorgegebenen Werte bzw. Soll-Fräswerte erfolgen. Auf der Seite auf der der Sollwert Null oder nahezu Null beträgt, liegt die bereits gefräste Frässpur vor. So kann beispielsweise der Sollwert auf der rechten Seite des Ausführungsbeispiels gemäß Fig. 4 Null betragen.

Der Sollwert auf der in Fahrtrichtung 26 linken Seite ist diesem Fall größer Null und der Istwert auf der in Fahrtrichtung 26 linken Seite ist gleich dem Sollwert oder entspricht nahezu dem Sollwert.

Sofern dies mittels der Steuereinrichtung 40 detektiert wird, wird in diesem Fall zum Ermitteln der Frästiefe anstelle der ersten Messeinrichtung 30 Messungen zumindest der dritten Messeinrichtung 34 verwendet.

Alternativ können auch die ersten und/oder zweite Messeinrichtung 30, 32 jeweils zwei Sensoren an den Seitenschildern 4, 6 aufweisen. So kann beispielsweise, wie in Fig. 3 gezeigt ist, die Messeinrichtung 30 zwei Sensoren 30A und 30B an dem Seitenschild 4 aufweisen. Auch die zweite Messeinrichtung 32 kann an dem Seitenschild 6 zwei Sensoren 32A und 32B aufweisen. In Fig. 3 ist das Ausführungsbeispiel mit zwei Sensoren 30A und 30B dargestellt, wohingegen in Fig. 2 lediglich die Messeinrichtung 30 nur einen Sensor aufweist. Ansonsten entspricht das Ausführungsbeispiel gemäß Fig. 3 jedoch dem Ausführungsbeispiel gemäß Fig. 2.

Die beiden Sensoren 30A, 30B bzw. 32A und 32B sind in Fahrtrichtung hintereinander angeordnet. Auf diese Weise kann mittels der Sensoren 30A und 30B bzw. 32A und 32B die Schrägstellung des jeweiligen Seitenschilds 4, 6 festgestellt werden. Sofern die Schrägstellung des Seitenschilds 4, 6 einen vorgegebenen Wert, beispielsweise eine vorgegebene Winkelstellung relativ zum Maschinenrahmen 2 aufweist, kann festgestellt werden, dass der zweite Fräsbetrieb vorliegt. Ebenfalls kann festgestellt werden, dass der zweite Fräsbetrieb vorliegt, wenn die Messwerte der Sensoren 30A (32A) von den Messwerten der Sensoren 30B (32B) um einen Wert abweichen, der größer als ein Referenzwert ist. Auch in diesem Fall kann die Steuereinrichtung 40 anstelle der Messeinrichtung 30, die die zwei Sensoren 30A und 30 B aufweist, die dritte Messeinrichtung 34 verwendet werden.

Als weitere Alternative können auch GPS-Daten des bisherigen Fräsvorgangs herangezogen werden. Auf diese Weise kann festgestellt werden, an welchen Stellen bereits gefräste Frässpuren vorliegen, und ob neben der noch nicht gefrästen Frässpur eine bereits gefräste Frässpur angeordnet ist. Die bisher gefrästen Frässpuren können anhand der GPS-Signale in der Datenbank hinterlegt sein und ständig aktualisiert werden.

Als weitere Alternative kann auch ein Profildetektionssensor 60 an dem Maschinenrahmen vor der Fräswalze 10 angeordnet sein, der das Querschnittsprofil des Bodenbelags 20 vor der Fräswalze detektiert. Auch auf diese Weise kann festgestellt werden, ob neben der zu fräsenden Frässpur bereits eine gefräste Frässpur 42 angeordnet ist.

Sobald der zweite Fräsbetrieb detektiert wird, werden nicht mehr die Messungen der Messeinrichtung verwendet, die auf der Seite angeordnet ist, wo die bereits gefräste Frässpur 42 angeordnet ist. Anstelle dieser Messeinrichtung wird dann eine dritte Messeinrichtung 34 verwendet. Gemäß dem Ausführungsbeispiel werden z.B. die Messungen der Messeinrichtung 30 durch die Messungen der Messeinrichtung 34, die an dem Abstreifer 8 angeordnet ist, ersetzt.

Sofern die bereits gefräste Frässpur 42 auf der Seite der zweiten Messeinrichtung 32 und nicht auf der Seite der ersten Messeinrichtung 30 angeordnet ist, gilt das oben Beschriebene auch für die zweite Messeinrichtung 32.

Die dritte Messeinrichtung 34 kann beispielsweise die Querneigung des Maschinenrahmens 2 messen. So kann beispielsweise die Messeinrichtung 34 zwei Sensoren 34A und 34B aufweisen, die in Fahrtrichtung 26 nebeneinander angeordnet sind, vorzugsweise auf der in Fahrtrichtung 26 linken und rechten Seite des Abstreifers 8. Die zwei Sensoren 34A und 34B können jeweils ebenfalls den Abstand des Maschinenrahmens an der Stelle zur Bodenoberfläche ermitteln. Der Abstreifer liegt immer auf dem Bodenbelag auf. Auf diese Weise kann die Querneigung des Abstreifers 8 zum Maschinenrahmen 2 gemessen werden, wodurch die Querneigung des Maschinenrahmens 2 zum Bodenbelag bestimmbar ist. Zum Ermitteln der Frästiefe kann im zweiten Fräsbetrieb die auf der in Fahrtrichtung linken Seite vorgesehene Messeinrichtung 32 und die die Querneigung messende Messeinrichtung 34 herangezogen werden.

Zum Detektieren, ob wieder der erste Fräsbetrieb vorliegt, kann beispielsweise die Baumaschine eine vorgegebene Fahrstrecke zurücklegen, nach der automatisch der erste Fräsbetrieb detektiert wird. Eine vorgegebene Fahrstrecke kann beispielsweise 1,5 m betragen. Sobald wieder der erste Fräsbetrieb detektiert wird, werden wieder die erste und die zweite Messeinrichtung 30, 32 zur Messung der Frästiefe herangezogen.

Zum Feststellen, ob nach dem zweiten Fräsbetrieb wieder der erste Fräsbetrieb vorliegt, kann auch überprüft werden, ob die Messungen der Messeinrichtung, die auf der Seite angeordnet ist, auf der die gefräste Frässpur 42 angeordnet ist, der Istwert gleich dem Sollwert oder nahezu dem Sollwert entspricht, insbesondere, ob die eingestellte Frästiefe Null der gemessenen Frästiefe entspricht. Sobald dies vorliegt, kann auch wieder in dem erneuten ersten Fräsbetrieb die erste und die zweite Messeinrichtung 30, 32 zur Messung der Frästiefe herangezogen werden. Die erneute Umstellung kann jedoch auch mit einer zeitlichen Verzögerung bzw. einem Nachlauf erfolgen.

## Patentansprüche

1. Selbstfahrende Baumaschine (1), insbesondere Straßenfräsmaschine oder Surface Miner, zum Bearbeiten eines Bodenbelags (20), mit
- einer Fräswalze (10), die in einem Maschinenrahmen (2) gelagert ist, wobei beim Fräsen des Bodenbelags (20) mit der Fräswalze (10) eine Frässpur (42) entsteht, wobei die Fräswalze (10) eine erste und eine zweite Stirnseite (11, 13) aufweist,
- zumindest einer ersten Messeinrichtung (30), die neben der ersten Stirnseite (11) der Fräswalze (10) angeordnet ist und den Abstand des Maschinenrahmens (2) neben der ersten Stirnseite (11) der Fräswalze (10) relativ zum Bodenbelag (20) misst,
- zumindest einer zweiten Messeinrichtung (32), die neben der zweiten Stirnseite (13) der Fräswalze (10) angeordnet ist und den Abstand des Maschinenrahmens (2) neben der zweiten Stirnseite (13) der Fräswalze (10) relativ zum Bodenbelag (20) misst,
- zumindest einer dritten Messeinrichtung (34), und
- einer Steuereinrichtung (40), die zum Steuern der Frästiefe ausgebildet ist, wobei in einem ersten Fräsbetrieb die Steuereinrichtung (40) die Frästiefe mit Hilfe von Messungen der ersten und der zweiten Messeinrichtung (30, 32) ermittelt,
**dadurch gekennzeichnet,**
**dass** die Steuereinrichtung (40) derart ausgebildet ist, dass mittels der Steuereinrichtung (40) ein zweiter Fräsbetrieb detektierbar ist, bei dem die Fräswalze (10) an einer noch nicht gefrästen Frässpur angesetzt wird, die neben einer bereits gefrästen Frässpur (42) angeordnet ist, wobei
die Steuereinrichtung (40) derart ausgebildet ist, dass sobald der zweite Fräsbetrieb detektiert wird, zum Ermitteln der Frästiefe anstelle der ersten oder der zweiten Messeinrichtung (30, 32) Messungen der zumindest einen dritten Messeinrichtung (34) verwendet,
wobei die Steuereinrichtung (40) ausgebildet ist zum Überprüfen, ob die Baumaschine (1) nach dem zweiten Fräsbetrieb erneut in dem ersten Fräsbetrieb fräst, und dass die Steuereinrichtung (40) derart ausgebildet ist, dass sobald das erneute Fräsen im ersten Fräsbetrieb festgestellt wird, die Frästiefe erneut mit Hilfe von Messungen der ersten und der zweiten Messeinrichtung (30, 32) ermittelt, wobei die Steuereinrichtung (40) ausgebildet ist, zum Feststellen des erneuten Fräsens im ersten Fräsbetrieb die Zeit und/oder die von der Baumaschine (1) zurückgelegte Wegstrecke zu überprüfen und mit einer vorgegebenen Zeit und/oder Wegstrecke zu vergleichen.

2. Selbstfahrende Baumaschine (1) nach Anspruch 1, **dadurch gekennzeichnet, dass** die Steuereinrichtung (40) zum Detektieren des zweiten Fräsbetriebs bei dem die Fräswalze (10) an einer noch nicht gefrästen Frässpur angesetzt wird, die neben einer bereits gefrästen Frässpur (42) angeordnet ist, ausgebildet ist, die gemessenen und/oder die vorgegebenen Werte der ersten und/oder der zweiten Messeinrichtung (30, 32) auszuwerten.

3. Selbstfahrende Baumaschine (1) nach Anspruche 2, **dadurch gekennzeichnet, dass** die Steuereinrichtung (40) zum Detektieren des zweiten Fräsbetriebs bei dem die Fräswalze (10) an einer noch nicht gefrästen Frässpur angesetzt wird, die neben einer bereits gefrästen Frässpur angeordnet ist, ausgebildet ist, die Differenz zwischen den vorgegebenen und den gemessenen Werten der ersten und/oder zweiten Messeinrichtung (30, 32) zu bilden und mit einem vorgegebenen Referenzwert zu vergleichen.

4. Selbstfahrende Baumaschine (1) nach einem der Ansprüche 1 bis 3, **dadurch gekennzeichnet, dass** die erste Messeinrichtung (30) zumindest zwei Sensoren (30A, 30B) und die zweite Messeinrichtung (32) zumindest zwei Sensoren (32A, 32B) aufweist, die jeweils in Fahrtrichtung hintereinander angeordnet sind, wobei die Steuereinrichtung (40) zum Detektieren des zweiten Fräsbetriebs ausgebildet ist, die zumindest zwei Sensoren (30A, 30B) der ersten Messeinrichtung (30) und/oder die zumindest zwei Sensoren (32A, 32B) der zweiten Messeinrichtung (32) auszuwerten

5. Selbstfahrende Baumaschine (1) nach einem der Ansprüche 1 bis 4, **dadurch gekennzeichnet, dass** die Steuereinrichtung (40) ausgebildet ist, anhand von GPS Daten zu überprüfen, ob der zweiten Fräsbetrieb vorliegt, wobei die Steuereinrichtung (40) insbesondere ausgebildet ist, die aktuellen GPS Daten der Baumaschine mit gespeicherten GPS Daten bereits gefräster Frässpuren zu vergleichen.

6. Selbstfahrende Baumaschine (1) nach einem der Ansprüche 1 bis 5, **dadurch gekennzeichnet, dass** ein Profildetektionssensor an dem Maschinenrahmen angeordnet ist, der ausgebildet ist, das Profil der Bodenoberfläche in Fahrtrichtung vor der Fräswalze (10) zu detektieren, wobei die Steuereinrichtung (40) ausgebildet ist, mit Hilfe des Profildetektionssensor festzustellen, ob der zweite Fräsbetrieb vorliegt.

7. Selbstfahrende Baumaschine (1) nach einem der Ansprüche 1 bis 6, **dadurch gekennzeichnet**, das auf der ersten Stirnseite der Fräswalze (10) ein erstes Seitenschild als erster Kantenschutz und auf der zweiten Stirnseite der Fräswalze (10) ein zweites Seitenschild als zweiter Kantenschutz angeordnet sind, wobei das erste und zweite Seitenschild jeweils relativ zum Maschinenrahmen höhenverstellbar sind und jeweils auf dem Bodenbelag neben der Fräswalze aufliegen, wobei die zumindest eine erste Messeinrichtung (30) an dem ersten Seitenschild und die zumindest eine zweite Messeinrichtung an dem zweiten Seitenschild angeordnet sind, die jeweils die Höhenverstellung des ersten und zweiten Seitenschilds relativ zu dem Maschinerahmen messen.

8. Selbstfahrende Baumaschine (1) nach einem der Ansprüche 1 bis 7, **dadurch gekennzeichnet, dass** die zumindest eine dritte Messeinrichtung ausgebildet ist, die Querneigung des Maschinenrahmens zu messen.

9. Selbstfahrende Baumaschine (1) nach einem der Ansprüche 1 bis 8, **dadurch gekennzeichnet, dass** die zumindest eine dritte Messeinrichtung an einem Abstreifer angeordnet ist, der in Fahrtrichtung hinter der Fräswalze (10) angeordnet ist, höhenverstellbar ist und auf der Bodenoberfläche hinter der Fräswalze (10) aufliegt.

10. Selbstfahrende Baumaschine (1) nach Anspruch 9, **dadurch gekennzeichnet, dass** die dritte Messeinrichtung zumindest zwei Sensoren aufweist, die an dem Abstreifer angeordnet sind, die in einer orthogonal zur Fahrtrichtung verlaufenden Ebenen nebeneinander angeordnet sind.

11. Selbstfahrende Baumaschine (1) nach einem der Ansprüche 1 bis 10, **dadurch gekennzeichnet, dass** die Steuereinrichtung (40) derart ausgebildet ist, dass sobald die Steuereinrichtung (40) den zweiten Fräsbetrieb detektiert, die Steuereinrichtung (40) überprüft, ob die erste oder die zweite Messeinrichtung näher an der bereits gefrästen Frässpur angeordnet ist und dann im zweiten Fräsbetrieb zum Ermitteln der Frästiefe die Messungen der dritten Messeinrichtung und derjenigen Messeinrichtung verwendet, die weiter entfernt von der bereits gefrästen Frässpur angeordnet ist.

12. Verfahren zum Bearbeiten von Bodenbelägen mit einer selbstfahrenden Baumaschine, insbesondere Straßenfräsmaschine oder Surface Miner, bei dem eine Fräswalze (10) beim Fräsen des Bodenbelags eine Frässpur fräst, wobei zumindest eine erste Messeinrichtung (30) neben einer ersten Stirnseite der Fräswalze (10) und zumindest eine zweite Messeinrichtung (32) neben einer zweiten Stirnseite der Fräswalze (10) angeordnet ist, die jeweils den Abstand des Maschinenrahmens (2) neben der ersten Stirnseite bzw. neben der zweiten Stirnseite der Fräswalze (10) relativ zum Bodenbelag misst,
wobei die Frästiefe in einem ersten Fräsbetrieb mit Hilfe von Messungen der ersten und der zweiten Messeinrichtung (30, 32) ermittelt wird,
**dadurch gekennzeichnet,**
**dass** ein zweiter Fräsbetrieb mittels einer Steuereinrichtung (40) detektiet werden kann, bei dem die Fräswalze (10) an einer noch nicht gefrästen Frässpur angesetzt wird, die neben einer bereits gefrästen Frässpur (42) angeordnet ist, wobei
sobald der zweite Fräsbetrieb detektiert wird, zum Ermitteln der Frästiefe anstelle der erste und/oder der zweiten Messeinrichtung (30, 32) zumindest Messungen zumindest einer dritten Messeinrichtung (34) verwendet werden wobei überprüft wird, ob die Baumaschine (1) nach dem zweiten Fräsbetrieb erneut in dem ersten Fräsbetrieb fräst, und dass, sobald das erneute Fräsen im ersten Fräsbetrieb mittels der Steuereinrichtung (40) festgestellt wird, die Frästiefe erneut mit Hilfe von Messungen der ersten und der zweiten Messeinrichtung (30, 32) ermittelt wird, wobei zum Feststellen des erneuten Fräsens im ersten Fräsbetrieb die Zeit und/oder die von der Baumaschine (1) zurückgelegte Wegstrecke überprüft und mit einer vorgegebenen Zeit und/oder Wegstrecke vergleichen wird.

13. Verfahren nach Anspruch 12, **dadurch gekennzeichnet, dass** zum Detektieren des zweiten Fräsbetriebs, bei dem die Fräswalze (10) an einer noch nicht gefrästen Frässpur angesetzt wird, die neben einer bereits gefrästen Frässpur (42) angeordnet ist, die gemessenen und/oder die vorgegebenen Werte der ersten und/oder der zweiten Messeinrichtung (30, 32) ausgewertet werden.

14. Verfahren nach Anspruch 12 oder 13, **dadurch gekennzeichnet, dass** zum Detektieren des zweiten Fräsbetriebs, bei dem die Fräswalze (10) an einer noch nicht gefrästen Frässpur angesetzt wird, die neben einer bereits gefrästen Frässpur (42) angeordnet ist, die Differenz zwischen den vorgegebenen und den gemessenen Werten der ersten und/oder zweiten Messeinrichtung (30, 32) gebildet wird und mit einem vorgegebenen Referenzwert verglichen wird.

## Claims

1. Self-propelled construction machine (1), in particular road milling machine or surface miner, for working a ground pavement (20), comprising
- a milling drum (10), which is mounted in a machine frame (2), wherein a milling cut (42) develops during milling of the ground pavement (20) with the milling drum (10), wherein the milling drum (10) comprises a first and a second end side (11, 13),
- at least one first measuring device (30), which is arranged next to the first end side (11) of the milling drum (10) and measures the distance of the machine frame (2) relative to the ground pavement (20) next to the first end side (11) of the milling drum (10),
- at least one second measuring device (32), which is arranged next to the second end side (13) of the milling drum (10) and measures the distance of the machine frame (2) relative to the ground pavement (20) next to the second end side (13) of the milling drum (10),
- at least one third measuring device (34), and
- a control device (40) for controlling the milling depth, wherein, in a first milling operation, the control device (40) determines the milling depth by means of measurements performed by the first and the second measuring device (30, 32),
**characterized in that**
the control device (40) is configured such that a second milling operation is detectable by means of the control device (40), in which the milling drum (10) is positioned on an as yet non-milled milling cut that is arranged next to a previously milled milling cut (42), wherein the control device (40) is configured such that, as soon as the second milling operation is detected, it uses measurements performed by the at least one third measuring device (34) in lieu of the first or the second measuring device (30, 32) for determining the milling depth,
wherein the control device (40) is configured to verify whether the construction machine (1), after the second milling operation, mills in the first milling operation once again, and the control device (40) is configured to determine, as soon as renewed milling in the first milling operation is ascertained, the milling depth once again by means of measurements performed by the first and the second measuring device (30, 32), wherein the control device (40) is configured to verify, for ascertaining renewed milling in the first milling operation, the time and/or the distance travelled by the construction machine (1) and to compare the same with a specified time and/or travel distance.

2. Self-propelled construction machine (1) in accordance with claim 1, **characterized in that**, for detecting the second milling operation, in which the milling drum (10) is positioned on an as yet non-milled milling cut that is arranged next to a previously milled milling cut (42), the control device (40) is configured to evaluate the measured and/or the specified values of the first and/or the second measuring device (30, 32).

3. Self-propelled construction machine (1) in accordance with claim 2, **characterized in that**, for detecting the second milling operation, in which the milling drum (10) is positioned on an as yet non-milled milling cut that is arranged next to a previously milled milling cut, the control device (40) is configured to calculate the difference between the specified and the measured values of the first and/or second measuring device (30, 32) and to compare the same with a specified reference value.

4. Self-propelled construction machine (1) in accordance with one of the claims 1 to 3, **characterized in that** the first measuring device (30) comprises at least two sensors (30A, 30B) and the second measuring device (32) comprises at least two sensors (32A, 32B), which are each arranged behind one another as seen in the direction of travel, wherein the control device (40), for detecting the second milling operation, is configured toi evaluate the at least two sensors (30A, 30B) of the first measuring device (30) and/or the at least two sensors (32A, 32B) of the second measuring device (32).

5. Self-propelled construction machine (1) in accordance with one of the claims 1 to 4, **characterized in that** the control device (40) is configured to verify based on GPS data whether the second milling operation applies, wherein the control device (40) is configured, in particular, to compare the current GPS data of the construction machine with stored GPS data of previously milled milling cuts.

6. Self-propelled construction machine (1) in accordance with one of the claims 1 to 5, **characterized in that** a profile detection sensor is arranged on the machine frame, which is configured to detect the profile of the ground surface in front of the milling drum (10) as seen in the direction of travel, wherein the control device (40) is configured to ascertain, by means of the profile detection sensor, whether the second milling operation applies.

7. Self-propelled construction machine (1) in accordance with one of the claims 1 to 6, **characterized in that** a first side plate as first edge protection is arranged on the first end side of the milling drum (10), and a second side plate as second edge protection is arranged on the second end side of the milling drum (10), wherein the first and the second side plate are each height-adjustable relative to the machine frame and each rest on the ground pavement next to the milling drum, wherein the at least one first measuring device (30) is arranged on the first side plate and the at least one second measuring device is arranged on the second side plate, each measuring the height adjustment of the first and second side plate relative to the machine frame.

8. Self-propelled construction machine (1) in accordance with one of the claims 1 to 7, **characterized in that** the at least one third measuring device is configured to measure the transverse inclination of the machine frame.

9. Self-propelled construction machine (1) in accordance with one of the claims 1 to 8, **characterized in that** the at least one third measuring device is arranged on a scraper, which is arranged behind the milling drum (10) as seen in the direction of travel, is height-adjustable and rests on the ground surface behind the milling drum (10).

10. Self-propelled construction machine (1) in accordance with claim 9, **characterized in that** the third measuring device comprises at least two sensors, which are arranged on the scraper, which are arranged next to one another in a plane extending orthogonally to the direction of travel.

11. Self-propelled construction machine (1) in accordance with one of the claims 1 to 10, **characterized in that** the control device (40) is configured, as soon as the control device (40) detects the second milling operation, to verify whether the first or the second measuring device is arranged closer to the previously milled milling cut and then, in the second milling operation, for determining the milling depth, uses the measurements of the third measuring device and that measuring device which is arranged further away from the previously milled milling cut.

12. Method for working ground pavements with a self-propelled construction machine, in particular road milling machine or surface miner, in which a milling drum (10), during milling the ground pavement, mills a milling cut, wherein at least a first measuring device (30) is arranged next to a first end side of the milling drum (10) and at least a second measuring device (32) is arranged next to a second end side of the milling drum (10), each of which measures the distance of the machine frame (2) relative to the ground pavement next to the first end side or next to the second end side of the milling drum (10), respectively,
wherein the milling depth is determined, in a first milling operation, by means of measurements performed by the first and the second measuring device (30, 32),
**characterized in that**
a second milling operation may be detected by a control device (40), in which the milling drum (10) is positioned on an as yet non-milled milling cut that is arranged next to a previously milled milling cut (42), wherein
as soon as the second milling operation is detected, measurements performed by at least one third measuring device (34) are used in lieu of the first and/or the second measuring device (30, 32) for determining the milling depth, wherein it is verified whether the construction machine (1), after the second milling operation, mills in the first milling operation once again, and that, as soon as renewed milling in the first milling operation is ascertained by the control device (40), the milling depth is determined once again by means of measurements performed by the first and the second measuring device (30, 32), wherein, for ascertaining renewed milling in the first milling operation, the time and/or the distance travelled by the construction machine (1) is verified and compared with a specified time and/or travel distance

13. Method in accordance with claim 12, **characterized in that**, for detecting the second milling operation, in which the milling drum (10) is positioned on an as yet non-milled milling cut that is arranged next to a previously milled milling cut (42), the measured and/or the specified values of the first and/or the second measuring device (30, 32) are evaluated.

14. Method in accordance with claim 12 or 13, **characterized in that**, for detecting the second milling operation, in which the milling drum (10) is positioned on an as yet non-milled milling cut that is arranged next to a previously milled milling cut (42), the difference between the specified and the measured values of the first and/or second measuring device (30, 32) is calculated and compared with a specified reference value.

## Revendications

1. Engin de chantier automoteur (1), en particulier fraiseuse routière ou surface miner, destiné à traiter un revêtement de sol (20), doté
- d'un rouleau fraiseur (10), lequel est disposé dans un châssis de machine (2), dans lequel le fraisage du revêtement de sol (20) avec le rouleau fraiseur (10) crée une bande de fraisage (42), dans lequel le rouleau fraiseur (10) comporte une première et une deuxième face frontale (11, 13),
- d'au moins un premier dispositif de mesure (30), lequel est adjacent à la première face frontale (11) du rouleau fraiseur (10) et mesure l'écart du châssis de machine (2) par rapport au revêtement de sol (20) près de la première face frontale (11) du rouleau fraiseur (10),
- d'au moins un deuxième dispositif de mesure (32), lequel est adjacent à la deuxième face frontale (13) du rouleau fraiseur (10) et mesure l'écart du châssis de machine (2) par rapport au revêtement de sol (20) près de la deuxième face frontale (13) du rouleau fraiseur (10),
- d'au moins un troisième dispositif de mesure (34), et
- d'un dispositif de commande (40), lequel est réalisé pour commander la profondeur de fraisage, dans lequel le dispositif de commande (40) détermine la profondeur de fraisage à l'aide de mesures du premier et du deuxième dispositif de mesure (30, 32) dans un premier mode de fraisage,
**caractérisé**
**en ce que** le dispositif de commande (40) est réalisé de sorte qu'un deuxième mode de fraisage, lors duquel le rouleau fraiseur (10) est appliqué sur une bande de fraisage pas encore fraisée et adjacente à une bande de fraisage déjà fraisée (42), est détectable au moyen du dispositif de commande (40), dans lequel le dispositif de commande (40) est réalisé de sorte que pour autant que le deuxième mode de fraisage soit détecté, des mesures de l'au moins un troisième dispositif de mesure (34) sont utilisées à la place du premier ou du deuxième dispositif de mesure (30, 32) pour la détermination de la profondeur de fraisage,
dans lequel le dispositif de commande (40) est réalisé pour vérifier si l'engin de chantier (1) reprend le fraisage dans le premier mode de fraisage après le deuxième mode de fraisage, et en ce que le dispositif de commande (40) est réalisé de sorte que, pour autant que la reprise du fraisage dans le premier mode de fraisage soit établie, la détermination de la profondeur de fraisage reprend à l'aide de mesures du premier et du deuxième dispositif de mesure (30, 32), dans lequel le dispositif de commande (40) est, afin d'établir la reprise du fraisage dans le premier mode de fraisage, réalisé pour vérifier la durée et/ou la distance parcourue par l'engin de chantier (1) et à comparer avec une durée et/ou une distance prédéfinie.

2. Engin de chantier automoteur (1) selon la revendication 1, **caractérisé en ce qu'**afin de détecter le deuxième mode de fraisage lors duquel le rouleau fraiseur (10) est appliqué sur une bande de fraisage pas encore fraisée et adjacente à une bande de fraisage déjà fraisée (42), le dispositif de commande (40) est réalisé pour évaluer les valeurs mesurées et/ou prédéfinies du premier et/ou du deuxième dispositif de mesure (30, 32).

3. Engin de chantier automoteur (1) selon la revendication 2, **caractérisé en ce qu'**afin de détecter le deuxième mode de fraisage, lors duquel le rouleau fraiseur (10) est appliqué sur une bande de fraisage pas encore fraisée et adjacente à une bande de fraisage déjà fraisée, le dispositif de commande (40) est réalisé pour calculer la différence entre les valeurs prédéfinies et les valeurs mesurées du premier et/ou du deuxième dispositif de mesure (30, 32) et pour la comparer à une valeur de référence prédéfinie.

4. Engin de chantier automoteur (1) selon l'une des revendications 1 à 3, **caractérisé en ce que** le premier dispositif de mesure (30) comporte au moins deux capteurs (30A, 30B) et le deuxième dispositif de mesure (32) comporte au moins deux capteurs (32A, 32B), lesquels sont respectivement disposés l'un derrière l'autre dans la direction de déplacement, dans lequel, afin de détecter le deuxième mode de fraisage, le dispositif de commande (40) est réalisé pour évaluer les au moins deux capteurs (30A, 30B) du premier dispositif de mesure (30) et/ou les au moins deux capteurs (32A, 32B) du deuxième dispositif de mesure (32).

5. Engin de chantier automoteur (1) selon l'une des revendications 1 à 4, **caractérisé en ce que** le dispositif de commande (40) est réalisé pour vérifier à l'aide de données GPS la présence du deuxième mode de fraisage, dans lequel le dispositif de commande (40) est en particulier réalisé pour comparer les données GPS actuelles de l'engin de chantier avec les données GPS des bandes de fraisage déjà fraisées.

6. Engin de chantier automoteur (1) selon l'une des revendications 1 à 5, **caractérisé en ce qu'**un capteur de détection de profil est disposé sur le châssis de machine, lequel est réalisé pour détecter le profil de la surface du sol en avant du rouleau fraiseur (10) dans la direction de déplacement, dans lequel le dispositif de commande (40) est réalisé pour établir la présence du deuxième mode de fraisage à l'aide du capteur de détection de profil.

7. Engin de chantier automoteur (1) selon l'une des revendications 1 à 6, **caractérisé en ce qu'**une première plaque latérale est disposée sur la première face frontale du rouleau fraiseur (10) comme première protection de bord et une deuxième plaque latérale est disposée sur la deuxième face frontale du rouleau fraiseur (10) comme deuxième protection de bord, dans lequel la première et la deuxième plaque latérale sont respectivement réglables en hauteur par rapport au châssis de machine et appuient respectivement sur le revêtement de sol à côté du rouleau fraiseur, dans lequel l'au moins un premier dispositif de mesure (30) est disposé sur la première plaque latérale et l'au moins un deuxième dispositif de mesure est disposé sur la deuxième plaque latérale, lesquels mesurent le réglage en hauteur respectif de la première et de la deuxième plaque latérale par rapport au châssis de machine.

8. Engin de chantier automoteur (1) selon l'une des revendications 1 à 7, **caractérisé en ce que** l'au moins un troisième dispositif de mesure est réalisé pour mesurer l'inclinaison transversale du châssis de machine.

9. Engin de chantier automoteur (1) selon l'une des revendications 1 à 8, **caractérisé en ce que** l'au moins un troisième dispositif de mesure est disposé sur un racleur, lequel est disposé en arrière du rouleau fraiseur (10) dans la direction de déplacement, est réglable en hauteur et appuie sur la surface du sol derrière le rouleau fraiseur (10).

10. Engin de chantier automoteur (1) selon la revendication 9, **caractérisé en ce que** le troisième dispositif de mesure comporte au moins deux capteurs, lesquels sont disposés sur le racleur, lesquels sont disposés l'un à côté de l'autre dans un plan orthogonal à la direction de déplacement.

11. Engin de chantier automoteur (1) selon l'une des revendications 1 à 10, **caractérisé en ce que** le dispositif de commande (40) est réalisé de sorte que pour autant que le dispositif de commande (40) détecte le deuxième mode de fraisage, le dispositif de commande (40) vérifie si c'est le premier ou le deuxième dispositif de mesure qui est disposé le plus près de la bande de fraisage déjà fraisée puis, dans le deuxième mode de fraisage afin de déterminer la profondeur de fraisage, utilise les mesures du troisième dispositif de mesure et du dispositif de mesure qui est disposé le plus loin de la bande de fraisage déjà fraisée.

12. Procédé de traitement de revêtements de sol avec un engin de chantier automoteur, en particulier une fraiseuse routière ou un surface miner, lors duquel un rouleau fraiseur (10) fraise une bande de fraisage lors du fraisage du revêtement de sol, dans lequel au moins un premier dispositif de mesure (30) est disposé comme adjacent à une première face frontale du rouleau fraiseur (10) et au moins un deuxième dispositif de mesure (32) est disposé comme adjacent à une deuxième face frontale du rouleau fraiseur (10), lesquels mesurent l'écart du châssis de machine (2) par rapport au revêtement de sol respectivement près de la première face frontale et de la deuxième face frontale du rouleau fraiseur (10),
dans lequel la profondeur de fraisage est déterminée dans un premier mode de fraisage à l'aide de mesures du premier et du deuxième dispositif de mesure (30, 32), **caractérisé**
**en ce qu'**un deuxième mode de fraisage peut être détecté au moyen du dispositif de commande (40), lors duquel le rouleau fraiseur (10) est appliqué sur une bande de fraisage pas encore fraisée et adjacente à une bande de fraisage déjà fraisée (42),
dans lequel pour autant que le deuxième mode de fraisage soit détecté, au moins des mesures d'au moins un troisième dispositif de mesure (34) sont utilisées à la place du premier ou du deuxième dispositif de mesure (30, 32) pour la détermination de la profondeur de fraisage, dans lequel il est vérifié si l'engin de chantier (1) reprend le fraisage dans le premier mode de fraisage après le deuxième mode de fraisage, et en ce que, pour autant que la reprise du fraisage dans le premier mode de fraisage soit établie au moyen du dispositif de commande (40), la détermination de la profondeur de fraisage reprend à l'aide de mesures du premier et du deuxième dispositif de mesure (30, 32), dans lequel, afin d'établir la reprise du fraisage dans le premier mode de fraisage, la durée et/ou la distance parcourue par l'engin de chantier (1) sont vérifiées et comparées avec une durée et/ou une distance prédéfinie.

13. Procédé selon la revendication 12, **caractérisé en ce qu'**afin de détecter le deuxième mode de fraisage lors duquel le rouleau fraiseur (10) est appliqué sur une bande de fraisage pas encore fraisée et adjacente à une bande de fraisage déjà fraisée (42), les valeurs mesurées et/ou prédéfinies du premier et/ou du deuxième dispositif de mesure (30, 32) sont évaluées.

14. Procédé selon la revendication 12 ou 13, **caractérisé en ce qu'**afin de détecter le deuxième mode de fraisage, lors duquel le rouleau fraiseur (10) est appliqué sur une bande de fraisage pas encore fraisée et adjacente à une bande de fraisage déjà fraisée (42), la différence entre les valeurs prédéfinies et les valeurs mesurées du premier et/ou du deuxième dispositif de mesure (30, 32) est calculée et comparée à une valeur de référence prédéfinie.
